(19) Europäisches Patentamt
European Patent Office
Office européen des brevets

(11) **EP 2 106 696 A1**

(12) **EUROPÄISCHE PATENTANMELDUNG**

(43) Veröffentlichungstag:
07.10.2009   Patentblatt 2009/41

(21) Anmeldenummer: 08154064.3

(22) Anmeldetag: 04.04.2008

(51) Int Cl.:
*A01N 25/10* (2006.01)    *A01N 25/30* (2006.01)
*A01N 25/34* (2006.01)    *A01N 47/22* (2006.01)
*A01N 51/00* (2006.01)    *A01N 53/00* (2006.01)
*A01N 57/00* (2006.01)    *A01P 7/04* (2006.01)

(84) Benannte Vertragsstaaten:
AT BE BG CH CY CZ DE DK EE ES FI FR GB GR
HR HU IE IS IT LI LT LU LV MC MT NL NO PL PT
RO SE SI SK TR
Benannte Erstreckungsstaaten:
AL BA MK RS

(71) Anmelder: **Bayer CropScience AG**
**40789 Monheim (DE)**

(72) Erfinder: **Die Erfindernennung liegt noch nicht vor**

(54) **Materialien mit eingebetteten Insektiziden und Additiven**

(57)    Die vorliegende Erfindung betrifft Polymcrmatcrial, das wenigstens einen eingebetteten inscktiziden Wirkstoff und ein Additiv enthält, die bereits bei Raumtemperatur freigesetzt werden. Sie betrifft ebenso aus diesem Polymermaterial hergestellte Fäden, Gewebe und insbesondere Netze und Vorhänge. Die Erfindung betrifft weiterhin Verfahren zur Herstellung solchen Polymermaterials sowie die Verwendung der aus dem Material hergestellten Fäden, Gewebe und Netze zur Bekämpfung von Arthropoden.

EP 2 106 696 A1

## Beschreibung

Die vorliegende Erfindung betrifft Polymermaterial, das wenigstens einen eingebetteten insektiziden Wirkstoff und ein Additiv enthält, die bereits bei Raumtemperatur freigesetzt werden. Sie betrifft ebenso aus diesem Polymer hergestellte Materialien, z.B. in Form von Folien, Fäden, Geweben, Stoffen, Textilien, Netzen und Vorhängen. Die Erfindung betrifft weiterhin Verfahren zur Herstellung solchen Polymermaterials sowie die Verwendung der aus dem Material hergestellten Folien, Fäden, Gewebe, Stoffe, Textilien und Netze und Vorhänge zum Schutz von Mensch, Tier und Pflanzen gegen Arthropoden, besonders zur Bekämpfung von Insekten.

Es ist bereits lange bekannt, dass Menschen durch insektizid beschichtete Bettnetze im Schlaf vor Stichen von Arthropoden geschützt werden können. Dies ist besonders wichtig in Ländern, in denen die Arthropoden Krankheiten übertragen (beispielsweise Malaria). Beschichtete Gewebe können auch als Vorhänge vor Fenstern oder Türen benutzt werden, um in die Wohnungen eindringende Arthropoden zu bekämpfen. Auch das Abdecken von Gemüse oder Obst mit beschichteten Geweben zum Schutz vor Arthropoden ist bekannt. Auf diese Weise kann die Kontamination der später gegessenen Pflanzenteile mit Insektiziden minimiert werden.

Beschichtete Materialien sind prinzipiell wirksam, weisen aber eine Reihe von Nachteilen auf. Insbesondere durch Waschen des Materials wird die Beschichtung relativ schnell zerstört, so dass bereits nach wenigen Waschzyklen eine deutliche Abnahme der Wirkung beobachtet wird. Diesem Effekt muss durch eine hohe Anfangsbeladung und/oder die Zugabe von Bindern entgegengewirkt werden. Im ersten Fall ist die Oberflächenkonzentration an insektizidem Wirkstoff anfangs hoch, was aus toxikologischer Sicht unerwünscht ist. Die Zugabe von Bindern ist insofern unbefriedigend, als dass auch diese durch Waschen verloren gehen, so dass ihr positiver Einfluss auf die Waschfestigkeit beschichteter Materialien begrenzt ist.

Die bekannten Materialien für Netze sind im wesentlichen Polyester und Polyethylen, die allerdings nur eine begrenzte Haltbarkeit aufweisen (vor allem Polyester) und teils bei Berührung als unangenehm spröde empfundene Oberflächen (vor allem Polyethylen) aufweisen. Es wäre daher wünschenswert, Materialien basierend auf anderen, länger haltbaren, mechanisch stärker beanspruchbaren Polymeren zu entwickeln.

Im Pflanzenschutz wird bereits seit Jahren sehr erfolgreich durch die Benutzung von Additiven der Einsatz von Wirkstoffen reduziert. Additive sind dabei Substanzen, die selber keine insektizide Wirkung besitzen, aber die insektizide Wirkung von gleichzeitig applizierten Wirkstoffen erhöhen. Dies geschieht z.B. durch eine Verbesserung der Penetration des Wirkstoff durch die Pflanzen- oder Arthropoden-Kutikula oder durch Inhibition der Wirkstoff-Metabolisierung im Zieorganismus / in der Pflanze. Durch die Wirkung der Additive kann der Wirkstoffeinsatz reduziert werden, was eine Verringerung der Belastung von Anwendern und Konsumenten bewirkt sowie eine bessere Umweltverträglichkeit.

EP 1 648 230 offenbart ein Verfahren zur Herstellung von Pyrethroid-haltigem Polymer für die Benutzung in Netzen. Hierbei wird der Wirkstoff nicht direkt eingesetzt, sondern in Form eines kovalenten Assoziates mit einer zweiten Substanz, die eine C-C-Doppelbindung aufweisen muss. Dieses Assoziat wird dann mit einem Polymer zunächst zu einem hoch konzentrierten Zwischenprodukt (Masterbatch) verarbeitet, das dann wiederum zum Endprodukt verarbeitet wird. Diese Verfahren ist umständlich, so dass Bedarf für eine Vereinfachung besteht. In EP 1 648 230 wird beschrieben, dass es im Zuge des Verfahrens zu einer Reaktion zwischen der Doppelbindung des Chrysanthemat-Rests im Pyrethroid und der zweiten Substanz kommt. Dies bedeutet, dass das Verfahren spezifisch für Pyrethroide ist oder wenigstens für solche insektiziden Wirkstoffe, die eine C-C-Doppelbindung ähnlicher Reaktivität besitzen. Eine chemische Umsetzung des insektiziden Wirkstoffs ist auch problematisch, weil dabei eine Verminderung oder gar ein kompletter Verlust der Wirksamkeit erwartet werden muss.

Ein Netz enthaltend einen Wirkstoff aus der Klasse der Pyrethroide und ein Additiv (Piperonylbutoxid) wird offenbart in ZA 200509810. Dort findet allerdings keine Offenbarung statt, wie die Polymere hergestellt werden, inwieweit die Netze tatsächlich insektizid wirksam sind, wie lange sie wirksam bleiben oder insbesondere, inwieweit tatsächlich Vorteile aus der Anwesenheit des Piperonylbutoxids gezogen werden können. Insbesondere wird nicht offenbart oder nahegelegt, inwieweit andere Additive in polymerbasierten Materialien erfolgreich eingesetzt werden können. Es wird auf ein Masterbatch-Verfahren hingedeutet, wenngleich es in keiner Weise direkt beschrieben wird.

Die Benutzung von Polypropylen ist auch bekannt von insektiziden Verdampferplättchen (z.B. WO 97/29634, WO 99/01030, WO 05/044001). Dabei wird ein insektizider Wirkstoff in eine Polypropylenmatrix eingebettet und durch Erhitzen auf über 100 °C in kurzer Zeit freigesetzt, um z.B. einen Raum zu behandeln. Eine Benutzung bei Raumtemperatur und die Nutzung in lang wirkenden Materialien wird dort nicht beschrieben, ebenso wenig die Kombination mit Additiven.

Der vorliegenden Erfindung lag daher die Aufgabe zugrunde, neue Materialien zur Verfügung zu stellen, die mindestens eine der folgenden Aufgaben lösen:

- Gute insektizide Wirkung

- Verringerung der Wirkstoffkonzentration unter Beibehaltung der insektiziden Wirkung

- Schnell einsetzende insektizide Wirkung

- Lang anhaltende insektizide Wirkung

- Gleichmäßige Wirkstoff-Freisetzung

- Lange Haltbarkeit

- Einfache Herstellung

Diese Aufgaben werden durch die erfindungsgemäßen Polymere gelöst, welche ausgewählt sind aus Polyethylen und Polypropylen, wobei in das Polymer eingelagert

a) ein insektizider Wirkstoff ausgewählt aus Organophosphaten, Pyrethroiden, Neonikotinoiden und Carbamaten,

b) ein Additiv ausgewählt aus Sebacinsäure-Estern, Fettsäuren, Fettsäure-Estern, vegetabilen Ölen, Estern vegetabiler Öle, Alkohol-Alkoxylaten und Antioxidantien,

vorliegt.

Es ist überraschend, dass die Kombination aus Wirkstoff und Additiv auch aus der erfindungsgemäßen Matrix heraus einen Synergieeffekt zeigt, denn dieser war bisher nur für die Anwendung in Lösung gezeigt worden. Da jedoch die erfindungsgemäße Matrix ein festes Poylmermaterial ist, war es für den Fachmann nicht nahe liegend, dieses Prinzip zu übertragen. Denn zum Erreichen eines Synergismus müssen beide Komponenten zusammenwirken, d.h. sie müssen in einem für die jeweiligen Stoffe charakteristischen Verhältnis zueinander vorliegen. Das bedeutet, dass beide Komponenten eine aufeinander abgestimmte Diffusions-Dynamik aufweisen müssen, um zu jeder Zeit in dem charakteristischen Verhältnis zueinander an der Oberfläche des Materials vorliegen zu können. Nachdem es durch tägliches Benutzen zu einer Abnutzung der Stoffe von der Oberfläche kommt, muss auch der Nachschub jedes einzelnen Stoffes in so einer geeigneten Weise erfolgen, dass das charakteristische Verhältnis, welches für die synergistische Wirkung erforderlich ist, wiederhergestellt wird. In einer Flüssigkeit, in der die Komponenten frei beweglich sind und eine homogene Verteilung der Komponenten gegeben ist, ist dies aber viel einfacher möglich als in einer festen Phase, in der beide Komponenten völlig unterschiedliches Diffusionsverhalten zeigen können, z.B. Anreicherung an der Oberfläche. Außerdem treten während der Herstellung der erfindungsgemäßen Materialien thermische Belastungen auf, die weit über das hinausgehen, was bei der Herstellung von Flüssigformulierungen auftritt. Der Einfluss dieser extremen Bedingungen war für den Fachmann ebenfalls nicht einzuschätzen, zumal einige der Additive und Insektizide prinzipiell reaktive oder thermolabile Gruppen enthalten wie etwas Doppelbindungen und Estergruppierungen.

Erfindungsgemäß einsetzbare Wirkstoffe sind solche aus den Klassen der Organophosphate, Pyrethroide, Neonikotinoide und Carbamate.

Zu den Organophosphaten zählen z.B. Acephate, Azamethiphos, Azinphos (-methyl, -ethyl), Bromophos-ethyl, Bromfenvinfos (-methyl), Butathiofos, Cadusafos, Carbophenothion, Chlorethoxyfos, Chlorfenvinphos, Chlormephos, Chlorpyrifos(-methyl/-ethyl), Coumaphos, Cyanofenphos, Cyanophos, Chlorfenvinphos, Demeton-S-methyl, Demeton-S-methylsulphon, Dialifos, Diazinon, Dichlofenthion, Dichlorvos/DDVP, Dicrotophos, Dimethoate, Dimethylvinphos, Dioxabenzofos, Disulfoton, EPN, Ethion, Ethoprophos, Etrimfos, Famphur, Fenamiphos, Fenitrothion, Fensulfothion, Fenthion, Flupyrazofos, Fonofos, Formothion, Fosmethilan, Fosthiazate, Heptenophos, Iodofenphos, Iprobenfos, Isazofos, Isofenphos, Isopropyl O-salicylate, Isoxathion, Malathion, Mecarbam, Methacrifos, Methamidophos, Methidathion, Mevinphos, Monocrotophos, Naled, Omethoate, Oxydemeton-methyl, Parathion (-methyl/ -ethyl), Phenthoate, Phorate, Phosalone, Phosmet, Phosphamidon, Phosphocarb, Phoxim, Pirimiphos (-methyl/-ethyl), Profenofos, Propaphos, Propetamphos, Prothiofos, Prothoate, Pyraclofos, Pyridaphenthion, Pyridathion, Quinalphos, Sebufos, Sulfotep, Sulprofos, Tebupirimfos, Temephos, Terbufos, Tetrachlorvinphos, Thiometon, Triazophos, Triclorfon, Vamidothion

Zu den Pyrethroiden zählen z.B. Acrinathrin, Allethrin (d-cis-trans, d-trans), Beta-Cyfluthrin, Bifenthrin, Bioallethrin, Bioallethrin-S-cyclopentyl-isomer, Bioethanomethrin, Biopermethrin, Bioresmethrin, Chlovaporthrin, Cis-Cypermethrin, Cis-Resmethrin, Cis-Permethrin, Clocythrin, Cycloprothrin, Cyfluthrin, Cyhalothrin, Cypermethrin (alpha-, beta-, theta-, zeta-), Cyphenothrin, Deltamethrin, Empenthrin (1R-isomer), Esfenvalerate, Etofenprox, Fenfluthrin, Fenpropathrin, Fenpyrithrin, Fenvalerate, Flubrocythrinate, Flucythrinate, Flufenprox, Flumethrin, Fluvalinate, Fubfenprox, Gamma-Cyhalothrin, Imiprothrin, Kadethrin, Lambda-Cyhalothrin, Metofluthrin, Permethrin (cis-, trans-), Phenothrin (1R-trans isomer), Prallethrin, Profluthrin, Protrifenbute, Pyresmethrin, Resmethrin, RU 15525, Silafluofen, Tau-Fluvalinate, Tefluthrin, Terallethrin, Tetramethrin (-1R- isomer), Tralomethrin, Transfluthrin, ZXI 8901 und Pyrethrin (Pyrethrum). Erfindungsgemäß bevorzugt sind Beta-Cyfluthrin, Bifenthrin, Cyfluthrin, Deltamethrin und Transfluthrin. Erfindungsgemäß besonders bevorzugt sind Cyfluthrin, Deltamethrin und Transfluthrin.

Zu den Neonikotinoiden zählen z.B. Acetamiprid, Clothianidin, Dinotefuran, Imidacloprid, Nitenpyram, Nithiazine, Thiacloprid und Thiamethoxam. Erfindungsgemäß bevorzugt sind Imidacloprid und Clothianidin.

Zu den Carbamaten zählen z.B. Alanycarb, Aldicarb, Aldoxycarb, Allyxycarb, Aminocarb, Bendiocarb, Benfuracarb, Bufencarb, Butacarb, Butocarboxim, Butoxycarboxim, Carbaryl, Carbofuran, Carbosulfan, Cloethocarb, Dimetilan, Ethiofencarb, Fenobucarb, Fenothiocarb, Formetanate, Furathiocarb, Isoprocarb, Metam-sodium, Methiocarb, Methomyl, Metolcarb, Oxamyl, Pirimicarb, Promecarb, Propoxur, Thiodicarb, Thiofanox, Trimethacarb, XMC, Xylylcarb und Triazamate. Erfindungsgemäß bevorzugt sind Bendiocarb und Carbaryl.

Erfindungsgemäße Additive sind z.B. Sebacinsäure-Ester, Fettsäuren, Fettsäure-Ester, vegetabile Öle, Ester vegetabiler Öle, Alkohol-Alkoxylate und Antioxidantien.

Geeignete Sebacinsäure-Ester sind z.B. Dimethylsebacat, Diethylsebacat, Dibutylsebacat, Dibenzylsebacat, Bis-(N-Succinimidyl)-Sebacat, Bis-(2-Ethylhexyl)-Sebacat, Bis-(1-octyloxy-2,2,6,6-tetramethyl-4-piperidyl)-Sebacat, Bis-(2,2,6,6 - tetramethyl-4-piperidyl)-Sebacat und Bis-(1,2,2,6,6-Pentamethyl-4-piperidinyl)-Sebacat (BLS292).

Geeignete Fettsäuren sind bevorzugt einfach oder mehrfach ungesättigte Fettsäuren mit einer Kettenlänge von 12 bis 24 Kohlenstoffatomen, z.B. Palmitoleinsäure, Ölsäure, Elaidinsäure, Vaccensäure, Icosensäure, Cetoleinsäure, Erucasäure, Nervonsäure, Linolsäure, Alpha-Linolensäure, Gamma-Linolensäure, Arachidonsäure, Timnodonsäure, Clupanodonsäure und Cervonsäure. Bevorzugt sind Ölsäure, Linolsäure, Alpha-Linolensäure und Gamma-Linolensäure

Geeignete Fettsäure-Ester sind bevorzugt Methyl- oder Ethylester der oben aufgeführten Fettsäuren. Besonders bevorzugt sind Methylester.

Fettsäuren und ihre Ester können auch jeweils in Mischungen vorliegen.

Als vegetabile Öle kommen alle üblicherweise in agrochemischen Mitteln einsetzbare, aus Pflanzen gewinnbare Öle in Frage. Beispielhaft genannt seien Sonnenblumenöl, Rapsöl, Olivenöl, Rizinusöl, Rüböl, Maiskeirnöl, Baumwollsaatöl und Sojabohnenöl. Bevorzugt ist Rapsöl.

Geeignete Ester vegetabiler Öle sind Methyl- oder Ethylester der oben aufgeführten Öle. Bevorzugt sind Methylester.

Erfindungsgemäße Alkohol-Alkoxylate sind solche der Formel (I)

$$R\text{-}O\text{-}(EO)_m\text{-}R' \qquad (I)$$

worin

R   für verzweigtes oder unverzweigtes $C_8$-$C_{15}$-Alkyl steht,

m   für 5 bis 15 steht,

R'   für Wasserstoff oder $C_1$-$C_6$-Alkyl steht und

E   für $CH_2$-$CH_2$ steht,

Bevorzugt sind Alkohol-Alkoxylate, bei denen R für ein verzweigtes $C_{12}$-$C_{14}$-Alkyl steht, m für 6 bis 10 steht und R' für Wasserstoff steht. Solche Alkohol-Alkoxylate sind kommerziell erhältlich (Produktreihe Lutensol®, BASF).

Alkohol-Alkoxylate liegen aufgrund der Herstellung in einem Polymerisationsverfahren als Mischungen homologer Substanzen von unterschiedlicher Kettenlänge m vor, so dass sich für m auch nicht-ganzzahlige Durchschnittswerte ergeben können.

Als Additive einsetzbare Antioxidantien sind z.B. Butylhydroxytoluol, Butylhydroxyanisol und L-Ascorbinsäure.

Die Konzentration des insektiziden Wirkstoffs kann in dem Polymermaterial in einem relativ breiten Konzentrationsbereich (z.B. 0,01 bis 2 Gew.-%) variiert werden. Die Konzentration sollte dabei je nach Anwendungsgebiet so gewählt werden, dass den Anforderungen bezüglich insektizider Wirksamkeit, Haltbarkeit und Toxizität genügt wird. Eine Anpassung der Eigenschaften des Materials kann auch durch die Mischung von Insektiziden in dem Polymermaterial, durch die Verblendung von erfindungsgemäßem Materialien, die unterschiedliche Insektizide enthalten, geschehen oder durch die Verwendung von erfindungsgemäßen Materialien, die unterschiedliche Insektizide enthalten, die in Kombination miteinander verwendet werden, z.B. als Mosaik-Netze. Auf diese Weise können maßgeschneiderte Gewebe erhalten werden.

Die Konzentration des Additivs kann in dem Polymer ebenfalls in einem relativ breiten Konzentrationsbereich variiert werden. Die Konzentration sollte dabei so gewählt werden, dass ein möglichst ausgeprägter Synergismus mit dem vorhandenen Insektizid über einen möglichst langen Zeitraum auftritt.

Durch die geeignete Auswahl der Kombination von Insektizid und Additiv bei der Einlagerung in Polyethylen oder Polypropylen wird eine ausreichende Wirksamkeit gegen tierische Schädlinge solange auf der Oberfläche erreicht, wie genügend bioverfügbarer Wirkstoff auf der Oberfläche vorliegt. Die Abgaberate der erfindungsgemäßen Zusammensetzung auf der Oberfläche von Polyethylen oder Polypropylen Netzen wird so gewählt, dass die volle Wirksamkeit noch nach 60 Wäschen erhalten bleibt.

Das erfindungsgemäße Polymermaterial kann nach dem Grundmaterial angepassten Verfahren in beliebige Produkte weiterverarbeitet werden. Dazu gehören z.B. Folien, Luftpolsterfolien, Filme, Profile, Blätter, Drähte, Fäden, Bänder, Kabel- und Rohrverkleidungen, Gehäuse für elektrische Geräte (z.B. in Schaltkästen, Flugzeugen, Kühlschränken etc.).

Die erfindungsgemäßen Materialien und aus ihnen hergestellte Fäden, Gewebe, Netze etc. können mit gutem Erfolg zur Abtötung von schädlichen oder lästigen Gliederfüßern, insbesondere Spinnentiere und Insekten, verwendet werden.

Zu den Spinnentieren gehören Milben (z.B. Sarcoptes scabiei, Dermatophagoides pteronys-sinus, Dermatophagoides farinae, Dermanyssus gallinae, Acarus siro) und Zecken (z.B. Ixo-des ricinus, Ixodes scapularis, Argas reflexus, Ornithodorus moubata, Boophilius microplus, Amblyomma hebraeum, Rhipicephalus sanguineus).

Zu den saugenden Insekten gehören im wesentlichen die Stechmücken (z.B. Aedes aegypti, Aedes vexans, Culex quinquefasciatus, Culex tarsalis, Anopheles albimanus, Anopheles stephensi, Mansonia titillans), Schmetterlingsmücken (z.B. Phlebotomus papatasii), Gnitzen (z.B. Culicoides furens), Kriebelmücken (z.B. Simulium damnosum), Stechfliegen (z.B. Sto-moxys calcitrans), Tsetse-Fliegen (z.B. Glossina morsitans morsitans), Bremsen (z.B. Taba-nus nigrovittatus, Haematopota pluvialis, Chrysops caecutiens), Echte Fliegen (z.B. Musca domestica, Musca autumnalis, Musca vetustissima, Fannia canicularis), Fleischfliegen (z.B. Sarcophaga carnaria), Myiasis erzeugende Fliegen (z.B. Lucilia cuprina, Chrysomyia chloro-pyga, Hypoderma bovis, Hypoderma lineatum, Dermatobia hominis, Oestrus ovis, Gaste-rophilus intestinalis, Cochliomyia hominivorax), Wanzen (z.B. Cimex lectularius, Rhodnius prolixus, Triatoma infestans), Läuse (z.B. Pediculus humanis, Haematopinus suis, Damalina ovis), Flöhe (z.B. Pulex irritans, Xenopsylla cheopis, Ctenocephali-des canis, Ctenocephali-des felis) und Sandflöhe (Tunga penetrans).

Zu den beißenden Insekten gehören im wesentlichen Schaben (z.B. Blattella germanica, Periplaneta americana, Blatta orientalis, Supella longipalpa), Käfer (z.B. Sitiophilus granari-us, Tenebrio molitor, Dermestes lardarius, Stegobium paniceum, Anobium punctatum, Hy-lotrupes bajulus), Termiten (z.B. Reticulitermes lucifugus), Ameisen (z.B. Lasius niger, Mo-nomorium pharaonis), Wespen (z.B. Vespula germanica) und Larven von Motten (z.B. Ephestia elutella, Ephestia cautella, Plodia interpunctella, Hofmannophila pseudospretella, Tineola bisselliella, Tinea pellionella, Trichophaga tapetzella).

Bevorzugt werden die erfindungsgemäßen Materialien gegen Insekten, vor allem der Ord-nung Diptera und ganz besonders bevorzugt gegen die Unterordnung Nematocera einge-setzt.

Neben wenigstens einem Wirkstoff aus den Klassen der Organophosphate, Pyrethroide, der Carbamate oder der Neonikotinoide kann das erfindungsgemäße Polymer einen oder mehrere weitere insektizide Wirkstoffe enthalten. Geeignet sind z.B. DDT, Indoxacarb, Nicotine, Bensultap, Cartap, Spinosad, Camphechlor, Chlordane, Endosulfan, Gamma-HCH, HCH, Heptachlor, Lindane, Methoxychlor, Acetoprole, Ethiprole, Fipronil, Pyrafluprole, Pyriprole, Vaniliprole, Avermectin, Emamectin, Emamectin-benzoate, Ivermectin, Milbemycin, Diofenolan, Epofenonane, Fenoxycarb, Hydroprene, Kinoprene, Methoprene, Pyriproxifen, Triprene, Chromafenozide, Halofenozide, Methoxyfenozide, Tebufenozide, Bistrifluron, Chlofluazuron, Diflubenzuron, Fluazuron, Flucycloxuron, Flufenoxuron, Hexaflumuron, Lufenuron, Novaluron, Noviflumuron, Penfluron, Teflubenzuron, Triflumuron, Buprofezin, Cyromazine, Diafenthiuron, Azocyclotin, Cyhexatin, Fenbutatinoxide, Chlorfenapyr, Binapacyrl, Dinobuton, Dinocap, DNOC, Fenazaquin, Fenpyroximate, Pyrimidifen, Pyridaben, Tebufenpyrad, Tolfenpyrad, Hydramethylnon, Dicofol, Rotenone, Acequinocyl, Fluacrypyrim, Bacillus thuringiensis-Stämme, Spirodiclofen, Spiromesifen, Spirotetramat, 3-(2,5-Dimethylphenyl)-8-methoxy-2-oxo-1-azaspiro[4.5]dec-3-en-4-yl ethyl carbonate (alias: Carbonic acid, 3-(2,5-dimethylphenyl)-8-methoxy-2-oxo-1-azaspiro[4.5]dec-3-en-4-yl ethyl ester, CAS-Reg.-No.: 382608-10-8), Flonicamid, Amitraz, Propargite, Flubendiamide, Chloranthraniliprol, Thiocyclam hydrogen oxalate, Thiosultap-sodium, Azadirachtin, Bacillus spec., Beauveria spec., Codlemone, Metarrhizium spec., Paecilomyces spec., Thuringiensin, Verticillium spec., Aluminium phosphid, Methylbromide, Sulfurylfluorid, Cryolite, Flonicamid, Pymetrozine, Clofentezine, Etoxazole, Hexythiazox, Amidoflumet, Benclothiaz, Benzoximate, Bifenazate, Bromopropylate, Buprofezin, Chinomethionat, Chlordimeform, Chlorobenzilate, Chloropicrin, Clothiazoben, Cycloprene, Cyflumetofen, Dicyclanil, Fenoxacrim, Fentrifanil, Flubenzimine, Flufenerim, Flutenzin, Gossyplure, Hydramethylnone, Japonilure, Metoxadiazone, Petroleum, Piperonylbutoxid, Kaliumoleat, Pyridalyl, Sulfluramid, Tetradifon, Tetrasul, Triarathene und Verbutin.

## Herstellung der erfindungsgemäßen Polymere

Die Einarbeitung der Insektizide in die Polymer-Matrix erfolgt mit einem gleichläufigen, dichtkämmenden Doppelwellenextruder.

Bei Raumtemperatur feste Insektizide werden gemeinsam mit dem Ausgangs-Polymer-Granulat in den Einzug des Extruders dosiert. Die Extrudergehäuse sind auf 200°C temperiert. Im Extruder werden das Polymer und je nach Schmelzpunkt auch das Insektizid geschmolzen und vermischt. Das Gemisch wird durch eine Lochdüse extrudiert und granuliert.

Bei Raumtemperatur flüssige Insektizide werden zu dem bereits geschmolzenen Polymer in einer Verfahrenszone des Extruders über ein Nadelventil zugegeben. Je nach Viskosität und Schmelzpunkt des Insektizids wird das Insektizid dazu erhitzt.

In beiden Fällen kann zusätzlich ein festes oder flüssiges Additiv in gleicher Weise wie die Insektizide zugegeben werden.

Der Aufbau der Extruderschnecke wird dem jeweiligen Anwendungsfall angepasst.

Die Herstellung der Fäden erfolgt anschließend durch Schmelzespinnen. In diesem Verfahren wird das hergestellt insektizide Polymer in einem Einwellenextruder geschmolzen und mit Hilfe einer Zahnradpumpe durch eine Düsenplatte gedrückt. Der Düsenplatte ist ein Filterpaket vorgeschaltet. Die aus der Düsenplatte austretenden Polymerstränge werden mit hoher Geschwindigkeit verstreckt, mit einer Spinnpräparation versehen und aufgewickelt.

Aus den aufgewickelten Polymerfäden wird durch Wirken ein Gewebe hergestellt. Dafür stehen verschiedenste bekannte Verfahren zur Verfügung.

## Biologische Wirkung der erfindungsgemäßen Polymere

Die gute insektizide Wirkung der erfindungsgemäßen Polymerzusammensetzung geht aus den nachfolgenden Beispielen hervor. Während Netze enthaltend einen einzelnen Wirkstoff in der Wirkung Schwächen aufweisen, zeigen Materialien enthaltend einen Wirkstoff und Additiv eine Wirkung, die über eine einfache Wirkungssummierung hinausgeht.

Ein synergistischer Effekt liegt bei Insektiziden und Additiven immer dann vor, wenn die Wirkung der Mischung größer ist als die Summe der Wirkungen der einzeln applizierten Substanzen.

Die zu erwartende Wirkung für eine gegebene Kombination zweier Substanzen kann nach S.R. Colby, Weeds 15 (1967), 20-22 wie folgt berechnet werden:

Wenn

X den Abtötungsgrad, ausgedrückt in % der unbehandelten Kontrolle, beim Einsatz des Wirkstoffes A in einer Konzentration von m g/kg bedeutet,

Y den Abtötungsgrad, ausgedrückt in % der unbehandelten Kontrolle, beim Einsatz des Additivs in einer Konzentration von n g/kg bedeutet und

E den erwarteten Abtötungsgrad, ausgedrückt in % der unbehandelten Kontrolle, beim Einsatz des Wirkstoffs A und des Additivs in Aufwandmengen von m und n g/ha oder in einer Konzentration von m und n ppm bedeutet,

dann ist $E = X + Y - \dfrac{X \cdot Y}{100}$

Ist der tatsächliche insektizide Abtötungsgrad größer als berechnet, so ist die Kombination in ihrer Abtötung überadditiv, d.h. es liegt ein synergistischer Effekt vor. In diesem Fall muss der tatsächlich beobachtete Abtötungsgrad größer sein als der aus der oben angeführten Formel errechnete Wert für den erwarteten Abtötungsgrad (E).

### Testmethoden

Testinsekten

Weibliche Malariamücken (*Anopheles gambiae,* empfindlicher Stamm Kisumu), nur mit Zuckerwasser gefüttert.

Drei-Minuten-Exposition (Zylindertest)

Die Versuche wurden mit dem "WHO Adult Mosquito Susceptibility Test Kit" mit einer Expositionszeit von 3 Minuten an Teilproben durchgeführt. Die Netzstücke hatten eine Größe von 12 x 15 cm.

Der Knock-down wurde nach 5, 10, 15, 20, 30, 40, 50 und 60 Minuten bestimmt. Danach wurde den Mücken für 24 Stunden Wasser mit 5% Zucker gegeben und dann erneut die Mortalität bestimmt. Jeder Test bestand aus drei Durchgängen, die gemittelt wurden.

Die Berechnung der KT50- und KT95-Werte wurde mit dem Excel-Add-In XL fit 3.0 (ID Business Solutions Ltd., Guildford, Großbritannien) durchgeführt. Es wurde das Modell 205 mit gesetzten Schwellenwerten 0% und 100% benutzt.

Drei-Minuten-Exposition (Kegel-Test)

Die Tests wurden unter Benutzung von WHO Standard-Kegeln mit einer Expositionszeit von 3 Minuten an Teilproben durchgeführt. Die Netzstücke hatten eine Größe von 30 x 30 cm. Es wurden jeweils fünf Mücken gleichzeitig unter einen Kegel gegeben und vier Kegel auf einer Teilprobe verwendet. Dieselbe Probe wurde anschließend noch einmal mit vier und einmal zwei Kegeln getestet, d.h. 2,5 Wiederholungen mit insgesamt 50 Mücken.

Nach der Exposition wurden die Insekten in Plastikbecher zu je 10 Tieren überführt und nach 60 Minuten die Knock-down - Wirkung bestimmt. Danach wurde ebenfalls Zuckerwasser gegeben und nach 24 Stunden die Mortalität bestimmt. Nach den Tests wurden Mittelwerte berechnet.

Waschprozess

500 ml deionisiertes Wasser mit 0,2% (w/v) Waschmittel (Le Chat, Henkel, Frankreich) wurden bei 30°C in eine 1-Liter-Glasflasche gegeben. Ein 30 x 30 cm großes Stück Netz bzw. drei 15 x 12 cm große Netzstücke wurden in die Flasche gegeben, welche in einem Wasserbad bei 30°C auf einem Horizontal-Schüttler (155 Bewegungen pro Minute) stand. Danach wurde das Wasser aus der Flasche gegossen und die Probe zweimal mit 500 ml Wasser jeweils 10 Minuten ebenfalls unter Schütteln gespült.

Die Netzproben wurden auf einer Leine hängend zwei Stunden und danach noch wenigstens 24 Stunden liegend getrocknet, bevor erneut gewaschen wurde.

**Patentansprüche**

1. Polymer ausgewählt aus Polyethylen und Polypropylen, wobei in das Polymer eingelagert

   a) ein insektizider Wirkstoff ausgewählt aus Organophosphaten, Pyrethroiden, Neonikotinoiden und Carbamaten,
   b) ein Additiv ausgewählt aus Sebacinsäure-Estern, Fettsäuren, Fettsäure-Estern, vegetabilen Ölen, Estern vegetabiler Öle, Alkohol-Alkoxylaten und Antioxidantien,

   vorliegt.

2. Polymer gemäß Anspruch 1, wobei das Polymer Polypropylen ist und der Wirkstoff ausgewählt ist aus Deltamethrin, Cyfluthrin, Transfluthrin, Bendiocarb, Carbaryl, Imidacloprid und Clothianidin.

3. Faser aus einem Polymer gemäß Anspruch 1.

4. Gewebe enthaltend Fasern gemäß Anspruch 3.

5. Bettnetz, Netzgewebe, Hängematte oder Vorhang enthaltend Fasern gemäß Anspruch 3.

6. Verfahren zur Herstellung eines Polymers gemäß Anspruch 1 durch Extrusion eines Polyethylen- oder Polypropylen-Ausgangsmaterials unter Zugabe von Insektizid und Additiv, wobei die Zugabe

   - im Falle eines bei Raumtemperatur festen Insektizids gemeinsam mit dem Ausgangsmaterial in den Einzug des Extruders geschieht und
   - im Fall eines bei Raumtemperatur flüssigen Insektizids in einer Verfahrenszone des Extruders über ein Nadelventil erfolgt.

**Europäisches Patentamt**

**EUROPÄISCHER RECHERCHENBERICHT**

Nummer der Anmeldung

EP 08 15 4064

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2008/004711 A (SUMITOMO CHEMICAL CO [JP]; OKUNO TAKESHI [JP]; ITOH TAKAAKI [JP]) 10. Januar 2008 (2008-01-10) <br> * Seite 3, Zeile 6 - Seite 4, Zeile 16 * <br> * Seite 6, Zeile 10 * <br> * Seite 9, Zeilen 17-20 * <br> * Seite 10, Zeilen 16-21 * <br> * Seite 14, Zeilen 13-16 * <br> * Production example 1 * <br> ----- | 1-6 | INV. <br> A01N25/10 <br> A01N25/30 <br> A01N25/34 <br> A01N47/22 <br> A01N51/00 <br> A01N53/00 <br> A01N57/00 <br> A01P7/04 |
| X | WO 2008/032844 A (SUMITOMO CHEMICAL CO [JP]; NITTA MASAYOSHI [JP]; TAKAHATA HIROAKI [JP]) 20. März 2008 (2008-03-20) <br> * Seite 2, Zeilen 8-19 * <br> * Beispiel 1 * <br> * Ansprüche 1-4 * <br> ----- | 1-6 | |
| X | GB 1 045 456 A (RICHARD GEORGE CHRISTOPHER JEN) 12. Oktober 1966 (1966-10-12) <br> * Spalte 2, Zeilen 44-69 * <br> * Beispiele 1,5 * <br> ----- | 1-6 | |
| X | WO 99/41983 A (BATTELLE MEMORIAL INSTITUTE [US]) 26. August 1999 (1999-08-26) <br> * Seite 1, Zeilen 10-19 * <br> * Seite 5, Zeilen 20-27 * <br> * Seite 11, Zeilen 17-20 * <br> * Tabelle 5a * <br> ----- | 1,2 | **RECHERCHIERTE SACHGEBIETE (IPC)** <br> A01N <br> A01P |
| X | WO 92/03927 A (PERYCUT CHEMIE AG [CH]) 19. März 1992 (1992-03-19) <br> * Seite 1, Absatz 1 * <br> * Seite 4, Absatz 3 * <br> * Seite 5, Zeile 21 - Seite 6, Zeile 9 * <br> * Seite 7, Absatz 2 * <br> * Seite 7, Zeile 28 - Seite 8, Zeile 4 * <br> ----- | 1 | |

-/--

Der vorliegende Recherchenbericht wurde für alle Patentansprüche erstellt

| Recherchenort | Abschlußdatum der Recherche | Prüfer |
|---|---|---|
| München | 31. Juli 2008 | Hateley, Martin |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.................................................................
& : Mitglied der gleichen Patentfamilie, übereinstimmendes Dokument

EPO FORM 1503 03.82 (P04C03)

**Europäisches**
**Patentamt**

# EUROPÄISCHER RECHERCHENBERICHT

Nummer der Anmeldung

EP 08 15 4064

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | JP 08 163950 A (TOKYO PRINTING INK MFG CO LTD) 25. Juni 1996 (1996-06-25) * Abstrakt * ----- | 1-6 | |

RECHERCHIERTE
SACHGEBIETE (IPC)

Der vorliegende Recherchenbericht wurde für alle Patentansprüche erstellt

| Recherchenort | Abschlußdatum der Recherche | Prüfer |
|---|---|---|
| München | 31. Juli 2008 | Hateley, Martin |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
...............................................................................................
& : Mitglied der gleichen Patentfamilie, übereinstimmendes
Dokument

EPO FORM 1503 03.82 (P04C03)

EP 2 106 696 A1

**ANHANG ZUM EUROPÄISCHEN RECHERCHENBERICHT**
**ÜBER DIE EUROPÄISCHE PATENTANMELDUNG NR.**

EP 08 15 4064

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

31-07-2008

| Im Recherchenbericht angeführtes Patentdokument | | Datum der Veröffentlichung | Mitglied(er) der Patentfamilie | | Datum der Veröffentlichung |
|---|---|---|---|---|---|
| WO 2008004711 | A | 10-01-2008 | JP | 2008013508 A | 24-01-2008 |
| WO 2008032844 | A | 20-03-2008 | KEINE | | |
| GB 1045456 | A | 12-10-1966 | AU | 285738 A | |
| WO 9941983 | A | 26-08-1999 | AU | 749956 B2 | 04-07-2002 |
| | | | AU | 6177398 A | 06-09-1999 |
| | | | BR | 9815678 A | 24-10-2000 |
| | | | CA | 2320948 A1 | 26-08-1999 |
| | | | CN | 1291075 A | 11-04-2001 |
| | | | EA | 3788 B1 | 30-10-2003 |
| | | | EP | 1056339 A1 | 06-12-2000 |
| | | | JP | 2002503680 T | 05-02-2002 |
| | | | TR | 200002434 T2 | 22-01-2001 |
| WO 9203927 | A | 19-03-1992 | AT | 110931 T | 15-09-1994 |
| | | | CA | 2091065 A1 | 13-03-1992 |
| | | | CZ | 9300363 A3 | 19-01-1994 |
| | | | DE | 9012996 U1 | 10-10-1991 |
| | | | DK | 548172 T3 | 14-11-1994 |
| | | | EP | 0548172 A1 | 30-06-1993 |
| | | | ES | 2059150 T3 | 01-11-1994 |
| | | | HU | 63942 A2 | 29-11-1993 |
| | | | HU | 212880 B | 30-12-1996 |
| | | | RU | 2111666 C1 | 27-05-1998 |
| | | | US | 5641499 A | 24-06-1997 |
| JP 8163950 | A | 25-06-1996 | KEINE | | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1648230 A
- ZA 200509810
- WO 9729634 A
- WO 9901030 A
- WO 05044001 A
- RU 15525

**In der Beschreibung aufgeführte Nicht-Patentliteratur**

- **S.R. Colby.** *Weeds,* 1967, vol. 15, 20-22